# EUROPÄISCHE PATENTSCHRIFT

(11) **EP 1 681 318 B1**
(45) Veröffentlichungstag und Bekanntmachung des Hinweises auf die Patenterteilung: **24.07.2013**
(21) Anmeldenummer: 05028172.4
(22) Anmeldetag: 22.12.2005
(51) Int. Cl.: C09C 1/00

(54) **Farbstarke rote Effektpigmente**
Red effect pigments
Pigments à effet rouge

(30) Priorität: 17.01.2005 DE 102005002124
(43) Veröffentlichungstag der Anmeldung: 19.07.2006
(73) Patentinhaber: Merck Patent GmbH, 64293 Darmstadt (DE)
(72) Erfinder: Pfaff, Gerhard, Dr., 64839 Münster (DE); Foerderer, Cornelia, 64646 Heppenheim (DE); Dietz, Johann, Dr., 63218 Dietzenbach (DE); Warthe, Doreen, 64347 Griesheim (DE)

(56) Entgegenhaltungen:
- EP-A- 1 281 732
- WO-A-93/08237
- DE-A1- 10 354 763
- DE-A1-102004 045 352
- P. HOFFMANN, W. DUSCHEK: "Neue Effektpigmente" BERICHTSBAND DFO 41, Bd. 50, 1999, Seiten 123-132, XP008082167

## Beschreibung

Die vorliegende Erfindung betrifft farbstarke rote Effektpigmente umfassend mit Eisenoxid beschichtete SiO₂-Plättchen, wobei die Gesamtdicke der Effektpigmente nicht größer als 500 nm (+/- 30 nm) ist. Ebenfalls Gegenstand der vorliegenden Erfindung sind Verfahren zur Herstellung dieser Pigmente, wobei SiO₂-Plättchen mit Eisenoxid beschichtet werden, wobei die Dicken der SiO₂-Plättchen und der Eisenoxidschichten derart gewählt werden, dass die Gesamtdicke der roten Effektpigmente nicht größer als 500 nm (+/- 30 nm) wird sowie die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

Der Einsatz von roten Glanz- oder Effektpigmenten ist weit verbreitet. Bei Automobillacken, dekorativen Beschichtungen aller Art sowie bei der Einfärbung von Kunststoffen, bei Anstrich- und Druckfarben sowie bei Anwendungen in der dekorativen Kosmetik sind derartige Pigmente unverzichtbar geworden. In der sie umgebenden Matrix richten sich diese Pigmente idealerweise parallel zur Oberfläche der Beschichtung aus und entfalten durch ein kompliziertes Zusammenspiel von Interferenz, Reflexion und Absorption des auffallenden Lichtes ihre optische Wirkung. Dabei stehen für die verschiedenen Anwendungsfälle eine brillante Farbgebung und hoher Glanz im Mittelpunkt des Interesses.

Die Herstellung solcher Pigmente erfolgt in der Regel durch Beschichtung von plättchenförmigen Glimmer mit Metalloxidschichten, insbesondere Eisenoxidschichten. Dabei weist insbesondere Glimmer den Nachteil auf, dass die Dicke des Substrates in einem weiten Bereich variiert und nicht gezielt einstellbar ist, was dazu führt, dass auch bei transparenten Substraten Lichttransmission und -reflexion am Substrat weitgehend unkontrollierbar ablaufen und daher nicht gezielt nutzbar sind.

In EP 1281732-A1 sind mehrschichtige Interferenzpigmente beschrieben, die auf einem SiO₂-Substrat alternierende Schichten aus lichtdurchlässigen Materialien mit einer Brechzahl > 1,8 und solchen mit einer Brechzahl < 1, 8 aufweisen. Die Substrate können eine Schichtdicke von 100 - 600 nm aufweisen. Die Gesamtdicke der Pigmente ist > 500 nm.

Aus WO 93/08237 sind plättchenförmige rote Pigmente bekannt, die aus einer Siliziumdioxidmatrix als Substrat bestehen, die mit einer Eisenoxidschicht beschichtet ist. Die Dicke der Matrix kann dabei in einem breiten Bereich eingestellt werden. Die in WO 93/08237 beschriebenen roten Pigmente haben den Nachteil, dass sie im Abkippen nach flacheren Betrachtungswinkeln einen bräunlichen Farbton zeigen, der unerwünscht ist. Vielmehr besteht ein Bedürfnis nach farbstarken roten Effektpigmenten mit einem reinen Rotton und hohem Glanz. Darüber hinaus haben die Substrate eine Dicke von 500 nm und die Dicken der aufgebrachten Schichten betragen vorzugsweise 20-250 nm. Insgesamt werden damit Pigmente mit einer relativ großen Gesamtdicke erhalten. Dies ist für viele Anwendungen aber ungünstig, da sich die anwendungstechnischen Eigenschaften der Pigmente verschlechtern, ein Phänomen, das beispielsweise durch P. Hoffmann, W. Duschek, Neue Effektpigmente, im Berichtsband DFG 41, 1999, 50, 123-132 beschrieben wird. Dicke Pigmente zeigen beispielsweise in Lackanwendungen Probleme bei der anzustrebenden parallelen Orientierung. Durch die ungünstige Geometrie der dickeren Pigmentpartikel wird die gewünschte, parallel zur Oberfläche erfolgende, Orientierung im Bindemittelsystem erschwert. Dickere Pigmentteilchen ordnen sich tendenziell schräg zueinander an, so dass das Licht nicht mehr optimal gerichtet reflektiert wird und Streueffekte den gerichteten Glanz reduzieren. Hieraus ergeben sich anwendungstechnische Nachteile, wie z.B. einen erhöhten Haze-Effekt (Glanzschleier) und eine schlechtere Abbildungsschärfe (DOI) der Pigmenthaltigen Beschichtungen. Weiterhin entstehen koloristische Nachteile allein dadurch, dass sich aufgrund der hohen Masse der Einzelpartikel bei gleicher Masseneinwaage eine erheblich geringere Anzahl an Pigmentteilchen in der Lackanwendung befindet. Dies hat nachteilige Auswirkungen auf das Deckvermögen, den Glanz und den Gesamtfarbeindruck. Die gewünschten Eigenschaften lassen sich daher im Falle dicker Pigmentteilchen nur schlecht realisieren.

Es bestand daher die Aufgabe, rote Effektpigmente mit verbesserten optischen Eigenschaften, insbesondere mit einem reinen Rotton zu finden, die sich universell in verschiedensten Anwendungen einsetzen lassen, ohne dabei anwendungstechnische Nachteile zu zeigen.

Die oben genannte Aufgabe wird durch Pigmente gemäß der vorliegenden Erfindung gelöst. Gegenstand der vorliegenden Erfindung sind demnach farbstarke rote Effektpigmente umfassend mit Eisenoxid beschichtete SiO₂₋Plättchen, wobei die Gesamtdicke der Effektpigmente nicht größer als 500 nm (+/- 30 nm) ist.

Ebenfalls Gegenstand der vorliegenden Erfindung sind Verfahren zur Herstellung dieser Pigmente, wobei SiO₂-Plättchen mit Eisenoxid beschichtet werden, wobei die Dicken der SiO₂-Plättchen und der Eisenoxidschichten derart gewählt werden, dass die Gesamtdicke der roten Effektpigmente nicht größer als 500 nm (+/- 30 nm) wird.

Die erfindungsgemäßen Pigmente zeichnen sich durch einen besonders farbstarken und farbreinen roten Farbeffekt aus. Dabei zeigen die roten Effektpigmente überraschenderweise keinen bzw. nur einen sehr geringen Farbflop-Effekt und sind frei von dem störenden Braunton anderer Rotpigmente mit Eisenoxidschichten. Darüber hinaus haben die erfindungsgemäßen Pigmente den Vorteil, dass sie in den unterschiedlichsten Anwendungen eingesetzt werden können und dabei verbesserte anwendungstechnische Eigenschaften zeigen, beispielsweise einen reduzierten Haze- Effekt und eine bessere Abbildungsschärfe (DOI) in Lackanwendungen bzw. ein besseres Hautgefühl in kosmetischen Formulierungen.

Aufgrund der vorteilhaften Eigenschaften eignen sich die erfindungsgemäßen Effektpigmente universell für eine große Anzahl unterschiedlichster Anwendungen. Gegenstand der vorliegenden Erfindung ist demgemäss auch die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

Die erfindungsgemäßen Pigmente basieren auf synthetischen SiO₂₋Plättchen als Substrat, die über eine einheitliche Schichtdicke verfügen und vorzugsweise gemäß der internationalen Anmeldung WO 93/08237 auf einem endlosen Band durch Verfestigung und Hydrolyse einer Wasserglaslösung hergestellt werden. Unter einheitlicher Schichtdicke wird dabei eine Schichtdickentoleranz von 3 bis 10%, bevorzugt von 3 bis 5 % der Gesamttrockenschichtdicke der Partikel verstanden. Die plättchenförmigen Siliziumdioxidpartikel liegen im allgemeinen in amorpher Form vor. Synthetische Plättchen dieser Art haben gegenüber natürlichen Materialien, wie z.B. Glimmer, den Vorteil, dass die Schichtdicke im Hinblick auf die gewünschten Effekte eingestellt werden kann und die Schichtdickentoleranz begrenzt ist.

Der Durchmesser der Substrate liegt üblicherweise zwischen 1 und 250 µm, vorzugsweise zwischen 2 und 100 µm. Ihre Dicke beträgt zwischen 250 und 400 nm und bevorzugt 330 bis 350 nm. Das mittlere Aspektverhältnis der plättchenförmigen Substrate, das heißt das Verhältnis vom mittleren Längenmesswert, der hier dem mittleren Durchmesser entspricht, zum mittleren Dickenmesswert, beträgt üblicherweise 5 bis 200, bevorzugt 20 bis 150 und besonders bevorzugt 30 bis 120.

Die genannten Substrate sind in den erfindungsgemäßen Pigmenten mit Eisenoxidschichten beschichtet, insbesondere mit Hämatitschichten (α-Fe₂O₃). Die Dicke der einzelnen Eisenoxidschichten beträgt zwischen 30 und 150 nm, bevorzugt 50 bis 130 nm. Wesentlich für die vorliegende Erfindung ist, dass die Gesamtdicke der roten Effektpigmente nicht größer als 500 nm (+/- 30 nm) ist. Die Beschichtung der SiO₂-Plättchen mit Eisenoxid kann sowohl nur auf den beiden größten gegenüberliegenden Flächen als auch umhüllend vorliegen, vorzugsweise sind die SiO₂₋Plättchen mit Eisenoxid vollständig umhüllt. Im Querschnitt ergibt sich daraus der Pigmentaufbau:

Fe₂O₃/SiO₂/Fe₂O₃

Die Summe der Dicken der insgesamt drei Schichten darf dabei die geforderten 500 nm (+/- 30 nm) nicht übersteigen.

Zur Optimierung des gewünschten reinen roten Farbtons ist eine genaue Abstimmung der Dicken des Substrates und der Eisenoxidschichten vorteilhaft. Hierbei sind die folgenden Verteilungen der Dicken für die Substrate und die einzelnen Eisenoxidschichten besonders bevorzugt

| **Dicke der SiO₂-Matrix [nm]** | **Dicke der beiden Fe₂O₃-Schichten (jeweils) [nm]** | **Gesamtdicke der roten Pigmente [nm]** |
|---|---|---|
| 250 | 125 +/- 15 | 500 +/- 30 |
| 300 | 100 +/- 15 | 500 +/- 30 |
| 350 | 75 +/- 15 | 500 +/- 30 |
| 400 | 50 +/- 15 | 500 +/- 30 |

In einer weiteren Ausführungsform der vorliegenden Erfindung können die erfindungsgemäßen Effektpigmente weiterhin mit einer zusätzlichen stabilisierenden organischen Beschichtung als äußere Schicht versehen sein. Beispiele für derartige Beschichtungen finden sich z.B. in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805, deren Offenbarung hiermit unter Bezugnahme mit eingeschlossen ist. Effektpigmente enthaltend eine organische Beschichtung, z.B. aus Organosilanen oder Organotitanaten bzw. Organozirkonaten zeigen neben den bereits genannten optischen Eigenschaften zusätzlich eine erhöhte Stabilität gegenüber Witterungseinflüssen, wie z.B. Feuchtigkeit und Licht, was vor allem für Industrielacke und im Automobilbereich von besonderem Interesse ist. Die Stabilisierung kann durch anorganische Komponenten der zusätzlichen Beschichtung verbessert werden. Insgesamt sind die jeweiligen Anteile für die zusätzliche stabilisierende Beschichtung so auszuwählen, dass die optischen Eigenschaften der erfindungsgemäßen Effektpigmente nicht wesentlich beeinflusst werden.

Ebenfalls Gegenstand der vorliegenden Erfindung sind Verfahren zur Herstellung dieser Pigmente, wobei SiO₂-Plättchen mit Eisenoxid beschichtet werden, wobei die Dicken der SiO₂-Plättchen und der Eisenoxidschichten derart gewählt werden, dass die Gesamtdicke der roten Effektpigmente nicht größer als 500 nm (+/- 30 nm) wird. Die jeweilige Abstimmung der Dicken der Substrate mit den Dicken der aufgebrachten Eisenoxidschichten ist bereits vorab erläutert.

Die Beschichtung mit Eisenoxidschichten kann nasschemisch und/oder durch CVD- oder PVD-Verfahren erfolgen.

Vorzugsweise handelt es sich bei den erfindungsgemäßen Verfahren zur Herstellung der Effektpigmente um nasschemische Verfahren, bei denen die bekannten, zur Herstellung von Perlglanzpigmenten entwickelten nasschemischen Beschichtungstechnologien angewendet werden können, die beispielsweise in den folgenden Publikationen beschrieben sind: DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017.

Zur Beschichtung werden die SiO₂-Plättchen in Wasser suspendiert und mit Eisenoxid durch Zugabe und Fällung entsprechender anorganischer Metallverbindungen beschichtet, wobei durch gleichzeitige Zugabe von Säure oder Base der für die Fällung von Eisenoxid notwendige pH-Wert eingestellt und konstant gehalten wird und anschließend das beschichtete Substrat aus der wässrigen Suspension abgetrennt, getrocknet und gegebenenfalls kalziniert wird, und wobei die Schichtdicken der einzelnen Schichten so eingestellt werden, dass nach dem Trocknen und gegebenenfalls Kalzinieren die Dicke des Pigmentes nicht größer als 500 nm ( +/- 30 nm) ist.

Die Kalzinierungstemperatur liegt im Allgemeinen zwischen 250 und 1000°C, insbesondere zwischen 350 und 900°C.

Prinzipiell sind für die Herstellung der erfindungsgemäßen Pigmente auch CVD- oder PVD-Verfahren zur Beschichtung von Partikeln mit Eisenoxid geeignet. Verfahren dieser Art sind zum Beispiel in W. Ostertag, Nachr. Chem. Tech. Lab 1994, 42, 849 beschrieben. Dabei ist es erforderlich, dass das Substrat während des Bedampfungsvorganges gleichmäßig in Bewegung gehalten wird, damit eine homogene Beschichtung aller Partikeloberflächen gewährleistet ist.

Darüber hinaus kann in einem ebenfalls erfindungsgemäßen Verfahren zusätzlich als äußere Schicht eine organische Beschichtung aufgebracht werden. Beispiele für derartige Beschichtungsverfahren finden sich unter anderem in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805. Beispiele für organische Beschichtungen sowie die damit verbundenen Vorteile sind bereits vorab beim Aufbau der erfindungsgemäßen Pigmente beschrieben worden. Der Verfahrensschritt der Aufbringung der organischen Beschichtung kann direkt an die anderen Schritte des erfindungsgemäßen Verfahrens angeschlossen werden. Die hierbei aufgebrachten Stoffe umfassen lediglich einen Gewichtsanteil von 0.1 bis 5 Gew. %, vorzugsweise 0.5 bis 3 Gew. %, des gesamten Pigmentes.

Die erfindungsgemäßen Effektpigmente sind vielfältig einsetzbar. Demgemäss ist die Verwendung der erfindungsgemäßen Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten ebenfalls Gegenstand der vorliegenden Erfindung.

Im Falle von Kosmetika eignen sich die erfindungsgemäßen Effektpigmente besonders für Produkte und Formulierungen der dekorativen Kosmetik, wie z.B. Nagellacke, farbgebende Puder, Lippenstifte oder Lidschatten, Seifen, Zahnpasten etc. Selbstverständlich können die erfindungsgemäßen Effektpigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z.B. Verdicker und rheologische Zusatzstoffe wie etwa Bentonite, Hektorite, Siliziumdioxid, Ca-Silikate, Gelatine, hochmolekulare Kohlenhydrate und/oder oberflächenaktive Hilfsmittel, etc. Die erfindungsgemäße Effektpigmente enthaltenden Formulierungen können dem lipophilen, hydrophilen oder hydrophoben Typ angehören. Bei heterogenen Formulierungen mit diskreten wässrigen und nicht-wässrigen Phasen können die erfindungsgemäßen Partikel in jeweils nur einer der beiden Phasen enthalten oder auch über beide Phasen verteilt sein.

Die pH-Werte der wässrigen Formulierungen können zwischen 1 und 14, bevorzugt zwischen 2 und 11 und besonders bevorzugt zwischen 5 und 8 liegen. Den Konzentrationen der erfindungsgemäßen Effektpigmente in der Formulierung sind keine Grenzen gesetzt. Sie können - je nach Anwendungsfall - zwischen 0.001 (rinse-off-Produkte, z.B. Duschgele) - 99% (z.B. Glanzeffekt-Artikel für besondere Anwendungen) liegen. Die erfindungsgemäßen Effektpigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E etc.), Selbstbräuner (z.B. DHA, Erythrolose u.a.) sowie weitere kosmetische Wirkstoffe wie z.B. Bisabolol, LPO, Ectoin, Emblica, Allantoin, Bioflavanoide und deren Derivate.

Bei Einsatz der Effektpigmente in Lacken und Farben sind alle dem Fachmann bekannten Anwendungsbereiche möglich, wie z.B. Pulverlacke, Automobillacke, Druckfarben für den Tief-, Offset-, Sieb- oder Flexodruck sowie für Lacke in Außenanwendungen. Die Lacke und Farben können hierbei beispielsweise strahlungshärtend, physikalisch trocknend oder chemisch härtend sein. Für die Herstellung der Druckfarben oder Flüssiglacke ist eine Vielzahl von Bindern, z.B. auf der Basis von Acrylaten, Methacrylaten, Polyestern, Polyurethanen, Nitrocellulose, Ethylcellulose, Polyamid, Polyvinylbutyrat, Phenolharzen, Maleinharzen, Stärke oder Polyvinylalkohol, Aminharzen, Alkydharzen, Epoxidharzen, Polytetrafluorethylen, Polyvinylidenfluoriden, Polyvinylchlorid oder Mischungen hieraus geeignet, insbesondere wasserlösliche Typen. Bei den Lacken kann es sich um Pulverlacke oder wasser- oder lösemittelbasierte Lacke handeln, wobei die Auswahl der Lackbestandteile dem Allgemeinwissen des Fachmanns unterliegt. Gängige polymere Bindemittel für Pulverlacke sind beispielsweise Polyester, Epoxide, Polyurethane, Acrylate oder Mischungen hieraus.

Darüber hinaus können die erfindungsgemäßen Effektpigmente in Folien und Kunststoffen verwendet werden, so z.B. in Agrarfolien, infrarotreflektierenden Folien und Scheiben, Geschenkfolien, Kunststoffbehältnissen und Formkörpern für alle dem Fachmann bekannten Anwendungen. Als Kunststoffe eignen sich alle gängigen Kunststoffe für die Einarbeitung der erfindungsgemäßen Effektpigmente, z.B. Duromere oder thermoplastische Kunststoffe. Die Beschreibung der Anwendungsmöglichkeiten und der einsetzbaren Kunststoffe, Verarbeitungsverfahren und Additive finden sich z.B. in der RD 472005 oder in R. Glausch, M. Kieser, R. Maisch, G. Pfaff, J. Weitzel, Perlglanzpigmente, Curt R. Vincentz Verlag, 1996, 83 ff., deren Offenbarungsgehalt hier mit umfasst ist.

Darüber hinaus eignen sich die erfindungsgemäßen Effektpigmente auch für den Einsatz im Sicherheitsdruck und in sicherheitsrelevanten Merkmalen für z.B. fälschungssichere Karten und Ausweise, wie z.B. Eintrittskarten, Personalausweise, Geldscheine, Schecks und Scheckkarten sowie für andere fälschungssichere Dokumente. Im Bereich der Landwirtschaft können die Effektpigmente zur Einfärbung von Saatgut und anderen Ausgangsgütern verwendet werden, darüber hinaus im Lebensmittelbereich zur Pigmentierung von Lebensmitteln. Zur Pigmentierung von Überzügen in Arzneimitteln wie z.B. Tabletten oder Dragees sind die erfindungsgemäßen Effektpigmente ebenfalls einsetzbar.

Die erfindungsgemäßen Effektpigmente eignen sich in den oben genannten Anwendungsgebieten ebenso zur Verwendung in Abmischungen mit organischen Farbstoffen und/oder Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Plättchen auf Basis von Glimmer, Glas, Al₂O₃, Fe₂O₃, SiO₂, etc. Die erfindungsgemäßen Effektpigmente können in jedem Verhältnis mit handelsüblichen Pigmenten und Füllern gemischt werden.

Als Füllstoffe sind z.B. natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe zu nennen. Bezüglich der Partikelform des Füllstoffes gibt es keine Einschränkungen. Sie kann den Anforderungen gemäß z.B. plättchenförmig, sphärisch oder nadelförmig sein.

Die erfindungsgemäßen Effektpigmente sind weiterhin geeignet zur Herstellung von fließfähigen Pigmentpräparationen und Trockenpräparaten enthaltend ein oder mehrere erfindungsgemäße Partikel, Bindemittel und optional ein oder mehrere Additive. Unter Trockenpräparate sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pellets, Granulate, Chips, Würstchen oder Briketts vor und weisen Teilchengrößen von 0.2-80 mm auf. Die Trockenpräparate finden insbesondere Anwendung bei der Herstellung von Druckfarben und in kosmetischen Formulierungen.

Die vollständige Offenbarung aller vorstehend genannten Patentanmeldungen, Patente und Veröffentlichungen ist durch Bezugnahme in dieser Anmeldung enthalten.

Die nachfolgenden Beispiele sollen die Erfindung näher erläutern, ohne sie jedoch zu begrenzen.

### Beispiele

### Beispiel 1:

100g SiO₂ Flakes (365 nm dick) werden in 2 I vollentsalztem Wasser auf 75°C erhitzt. Unter Rühren werden 1120 ml FeCl₃-Lösung (entspricht 130% Fe₂O₃) zugegeben. Der pH-Wert der Reaktionsmischung wird durch Zugabe von Natronlauge (30%ig) konstant bei 3 gehalten. Nach Zugabe der FeCl₃-Lösung wird der pH-Wert mit Natronlauge (30%ig) auf pH 5 angehoben. Das Produkt wird abfiltriert und mit vollentsalztem Wasser nachgewaschen. Nach Trocknung bei 110°C, wird bei 800°C kalziniert.

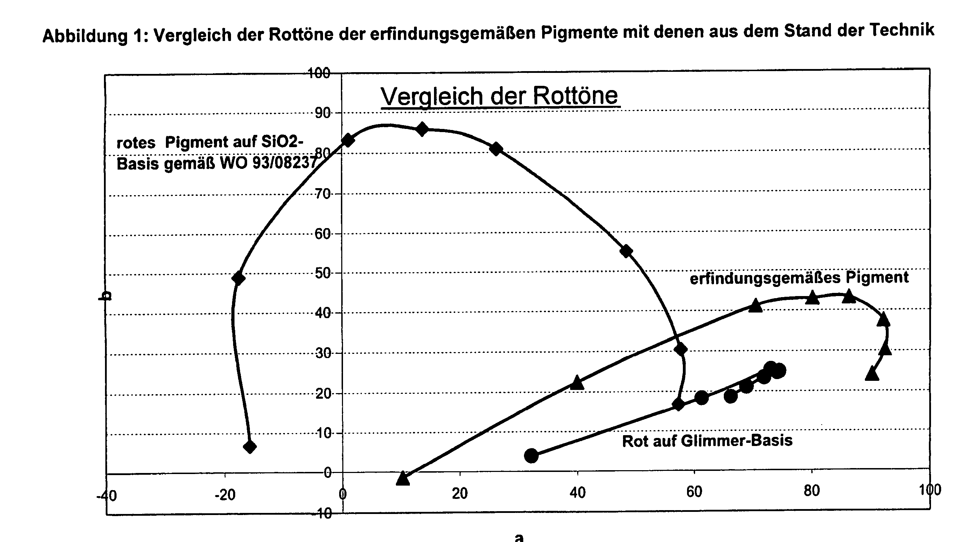

Das so hergestellte Pigment zeigt das in der Abbildung 1 (-A-) dargestellte Farbverhalten.

### Vergleichsbeispiel:

100g SiO₂ Flakes (445 nm dick) werden in 1 I vollentsalztem Wasser auf 75°C erhitzt. Unter Rühren werden 237 ml FeCl₃-Lösung (entspricht 27.5% Fe₂O₃) zugegeben. Der pH-Wert der Reaktionsmischung wird durch Zugabe von Natronlauge (30%ig) konstant bei 3 gehalten. Nach Zugabe der FeCl₃-Lösung wird der pH-Wert mit Natronlauge (30%ig) auf pH 5 angehoben. Das Produkt wird abfiltriert und mit vollentsalztem Wasser nachgewaschen. Nach Trocknung bei 110°C, wird bei 800°C kalziniert.

Das so hergestellte Pigment zeigt das in der Abbildung (-◆-) dargestellte Farbverhalten.

Abbildung 1 stellt die koloristische Situation durch einen Vergleich von Effektpigmenten mit unterschiedlichen Rottönen sowie unterschiedlichem Farbflop-Verhalten dar. Dabei zeigen die Farbkurven den Verlauf der Farbwerte im a,b-Farbsystem, die man erhält, wenn man eine das Pigment enthaltende Lackkarte vom senkrechten Winkel (90 Grad-Draufsicht) auf 180 Grad abkippt (waagerechte Achse ist die a-Achse, von links = grün nach rechts = rot, senkrechte Achse ist die b-Achse, von unten = blau nach oben = gelb).
Typische Eisenoxid-Glimmerpigmente (-•-) sind vergleichsweise farbschwach und zeigen keinen Farbflop. Der typische bräunliche Ton beim Abkippen kommt in der Kurve nicht zum Ausdruck.
Ein typisches SiO₂-Flake-Pigment mit einer Eisenoxidbeschichtung gemäß WO 93/08237 (-◆-) zeigt beim Anfangsfarbton kein klares Rot. Beim Abkippen tritt ein starker Farbflop, im Beispiel geht er nach Grün, auf.
Das Koloristik des erfindungsgemäßen Pigments (-▲-) zeigt ein sattes Rot, das auch beim Abkippen ein Rot bleibt. Die Farbe bleibt immer in einem Quadranten des a,b-Farbssytems, der Farbflop ist sehr gering.

## Patentansprüche

1. Farbstarke rote Effektpigmente umfassend mit Eisenoxid beschichtete SiO₂-Plättchen, wobei die Gesamtdicke der Effektpigmente nicht größer als 500 nm (+/- 30 nm) ist.

2. Effektpigmente gemäß Anspruch 1, **dadurch gekennzeichnet, dass** der Durchmesser der SiO₂-Plättchen zwischen 1 und 250 µm liegt und die Dicke der SiO₂-Plättchen zwischen 250 und 400 nm liegt.

3. Effektpigmente gemäß Anspruch 1 oder 2, **dadurch gekennzeichnet, dass** die Dicke der SiO₂-Plättchen 250, 300, 350 oder 400 nm beträgt.

4. Effektpigmente gemäß einem der Ansprüche 1 bis 3, **dadurch gekennzeichnet, dass** das Eisenoxid Hämatit (α-Fe₂O₃) ist.

5. Effektpigmente gemäß einem der Ansprüche 1 bis 4, **dadurch gekennzeichnet, dass** die Dicke der Eisenoxidschichten 30 bis 150 nm beträgt.

6. Effektpigmente gemäß einem der Ansprüche 1 bis 5, **dadurch gekennzeichnet, dass** auf den Effektpigmenten zusätzlich eine organische Beschichtung aufgebracht ist.

7. Verfahren zur Herstellung von Effektpigmenten gemäß Anspruch 1,
**dadurch gekennzeichnet, dass** SiO₂-Plättchen mit Eisenoxid beschichtet werden, wobei die Dicken der SiO₂-Plättchen und der Eisenoxidschichten derart gewählt werden, dass die Gesamtdicke der roten Effektpigmente nicht größer als 500 nm (+/- 30 nm) wird.

8. Verfahren gemäß Anspruch 7, **dadurch gekennzeichnet, dass** die Beschichtung mit Eisenoxid derart erfolgt, dass die Dicke der Schichten zwischen 30 und 150 nm beträgt.

9. Verfahren gemäß Anspruch 7 oder 8, **dadurch gekennzeichnet, dass** die Beschichtung mit Eisenoxid nasschemisch und/oder durch CVD- oder PVD-Verfahren erfolgt.

10. Verwendung von Effektpigmenten gemäß Anspruch 1 in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

## Claims

1. Intensely coloured red effect pigments comprising iron oxide-coated SiO₂ flakes, where the total thickness of the effect pigments is not greater than 500 nm (+/- 30 nm).

2. Effect pigments according to Claim 1, **characterised in that** the diameter of the SiO₂ flakes is between 1 and 250 µm and the thickness of the SiO₂ flakes is between 250 and 400 nm.

3. Effect pigments according to Claim 1 or 2, **characterised in that** the thickness of the SiO₂ flakes is 250, 300, 350 or 400 nm.

4. Effect pigments according to one of Claims 1 to 3, **characterised in that** the iron oxide is haematite (α-Fe₂O₃).

5. Effect pigments according to one of Claims 1 to 4, **characterised in that** the thicknesses of the iron-oxide layers is 30 to 150 nm.

6. Effect pigments according to one of Claims 1 to 5, **characterised in that** an organic coating has additionally been applied to the effect pigments.

7. Process for the preparation of effect pigments according to Claim 1, **characterised in that** SiO₂ flakes are coated with iron oxide, where the thicknesses of the SiO₂ flakes and of the iron oxide layers are selected in such a way that the total thickness of the red effect pigments is not greater than 500 nm (+/- 30 nm).

8. Process according to Claim 7, **characterised in that** the coating with iron oxide is carried out in such a way that the thickness of the layers is between 30 and 150 nm.

9. Process according to Claim 7 or 8, **characterised in that** the coating with iron oxide is carried out by wet-chemical methods and/or by CVD or PVD methods.

10. Use of effect pigments according to Claim 1 in cosmetics, paints, coatings, plastics, films, in security printing, in security features in documents and identity cards, for colouring seed, for colouring foods or in medicament coatings and for the preparation of pigment preparations and dry preparations.

## Revendications

1. Pigments à effet de rouge coloré intensément comprenant des flocons de SiO₂ revêtus d'oxyde de fer, où l'épaisseur totale des pigments à effet n'est pas supérieure à 500 nm (+/- 30 nm).

2. Pigments à effet selon la revendication 1, **caractérisés en ce que** le diamètre des flocons de SiO₂ est entre 1 et 250 µm et l'épaisseur des flocons de SiO₂ est entre 250 et 400 nm.

3. Pigments à effet selon la revendication 1 ou 2, **caractérisés en ce que** l'épaisseur des flocons de SiO₂ est de 250, 300, 350 ou 400 nm.

4. Pigments à effet selon l'une des revendications 1 à 3, **caractérisés en ce que** l'oxyde de fer est de l'hématite (α-Fe₂O₃).

5. Pigments à effet selon l'une des revendications 1 à 4, **caractérisés en ce que** les épaisseurs des couches en oxyde de fer est de 30 à 150 nm.

6. Pigments à effet selon l'une des revendications 1 à 5, **caractérisés en ce qu'**un revêtement organique a été appliqué additionnellement sur les pigments à effet.

7. Procédé pour la préparation de pigments à effet selon la revendication 1, **caractérisé en ce que** des flocons de SiO₂ sont revêtus d'oxyde de fer, où les épaisseurs des flocons de SiO₂ et des couches en oxyde de fer sont choisies de telle sorte que l'épaisseur totale des pigments à effet de rouge ne soit pas supérieure à 500 nm (+/- 30 nm).

8. Procédé selon la revendication 7, **caractérisé en ce que** le revêtement à l'aide d'oxyde de fer est mis en oeuvre de telle sorte que l'épaisseur des couches soit entre 30 et 150 nm.

9. Procédé selon la revendication 7 ou 8, **caractérisé en ce que** le revêtement à l'aide d'oxyde de fer est mis en oeuvre au moyen de procédés chimiques par voie humide et/ou de procédés CVD ou PVD.

10. Utilisation de pigments à effet selon la revendication 1 dans des cosmétiques, des peintures, des revêtements, des matières plastiques, des films, lors d'une impression de sécurité, au niveau de caractéristiques de sécurité dans des documents et des cartes d'identité, pour colorer des graines, pour colorer des aliments ou au niveau d'enrobages de médicaments et pour la préparation de préparations de pigments et de préparations sèches.
